# EUROPÄISCHE PATENTSCHRIFT

(11) **EP 3 890 102 B1**
(45) Veröffentlichungstag und Bekanntmachung des Hinweises auf die Patenterteilung: **31.07.2024**
(21) Anmeldenummer: 21163602.2
(22) Anmeldetag: 19.03.2021
(51) Int. Cl.: H01M 50/204, H01M 50/213, H01M 50/503, H01M 50/509, H01M 50/516, H01M 50/581, H01M 50/583, H01M 50/593

(54) **VORRICHTUNG MIT EINEM RAHMEN, DER AUFNAHMEN FÜR DIE STIRNSEITIGEN ENDABSCHNITTE VON BEZÜGLICH IHRER LÄNGSACHSE PARALLEL AUSGERICHTETEN BATTERIEZELLEN AUFWEIST**
DEVICE WITH A FRAME COMPRISING RECEPTACLES FOR THE FRONT END SECTIONS OF BATTERY CELLS ALIGNED PARALLEL WITH RESPECT TO THEIR LONGITUDINAL AXIS
DISPOSITIF DOTÉ D'UN CADRE COMPORTANT DES LOGEMENTS POUR DES SECTIONS D'EXTRÉMITÉ AVANT DES CELLULES DE BATTERIE EN PARALLÈLE PAR RAPPORT À LEUR AXE LONGITUDINAL

(30) Priorität: 30.03.2020 AT 502582020
(43) Veröffentlichungstag der Anmeldung: 06.10.2021
(73) Patentinhaber: John Deere Electric Powertrain LLC, Moline, IL 61265 (US)
(72) Erfinder: Pauer, Benjamin, 3950 Gmünd (AT); Wagner, Rafael, 4261 Rainbach (AT); Kregl, Philipp, 4292 Kefermarkt (AT)
(74) Vertreter: Hübscher & Partner Patentanwälte GmbH

(56) Entgegenhaltungen:
- EP-A1- 3 573 127
- WO-A1-2018/221004
- WO-A1-2021/113891
- AT-A4- 521 257

## Beschreibung

Die Erfindung bezieht sich auf eine Vorrichtung mit einem Rahmen, der Aufnahmen für die stirnseitigen Endabschnitte von bezüglich ihrer Längsachse parallel ausgerichteten Batteriezellen aufweist.

Aus dem Stand der Technik (WO2020037339A1) ist es bekannt, die stirnseitigen Endabschnitte zweier Batteriezellen über eine Kontaktfeder miteinander zu verbinden, wobei die Kontaktfeder eine Batteriezelle mantelseitig umgreift und über eine Schmelzsicherung mit dem gegensinnigen elektrischen Pol einer zweiten Batteriezelle stoffschlüssig verschweißt ist. Dabei besteht die Gefahr, dass die in zwei voneinander getrennte Anschlussstellen abgeschmolzene Schmelzsicherung durch einen im Fehlerfall, insbesondere beim Ausgasen, aus der Batteriezelle stirnseitig austretenden Batteriezellenwickel überbrückt wird und damit der elektrische Kontakt zwischen den beiden Anschlussstellen und damit auch den Batteriezellen bestehen bleibt, sodass eine Ausbreitung des Fehlers befürchtet werden muss. Darüber hinaus besteht bei dieser Ausführungsform die Schwierigkeit, dass für die Schmelzsicherung immer zwei gegenüberliegende, elektrisch gegensinnige Pole zweier Batteriezellen erforderlich sind, weil eine stoffschlüssige Verbindung aufgrund des notwendigen Energieeintrages üblicherweise nur am gegenüber der Stirnseite vortretenden Pluspolkontakt durchgeführt werden kann, ohne die Batteriezelle zu beschädigen.

Der Erfindung liegt somit die Aufgabe zugrunde, eine Vorrichtung der eingangs geschilderten Art so auszugestalten, dass eine Fehlerausbreitung zuverlässig unabhängig von der Lage der elektrischen Pole der Batteriezellen und deren elektrischen Verschaltung verhindert wird.

Die Erfindung löst die gestellte Aufgabe dadurch, dass jede Aufnahme einer ersten Gruppe ein die Stirnseite der aufgenommenen Batteriezelle gegenüber einer Kontaktfeder abdeckendes Schutzelement aufweist, das auf seiner der Batteriezelle gegenüberliegenden Seite einen Abstandhalter zur räumlichen Trennung der beiden Anschlussstellen einer durch die Kontaktfeder gebildeten Schmelzsicherung umfasst.

Demzufolge wird die räumliche Trennung der beiden Anschlussstellen der Schmelzsicherung unabhängig von der Formgebung der Stirnseite der in der Aufnahme liegenden Batteriezelle auch im Fall eines stirnseitigen Austretens des Batteriezellenwickels sichergestellt, weil einerseits das Schutzelement die Kontaktfeder von der Stirnseite und damit dem Batteriezellenwickel abschirmt und andererseits der Abstandhalter die beiden Anschlussstellen voneinander trennt, sodass nach Abschmelzen der Schmelzsicherung zwischen den Anschlussstellen eine neuerliche elektrische Verbindung verhindert wird. Die Kontaktfeder wird dazu üblicherweise zwischen den Anschlussstellen unter Zug gehalten, sodass sich die an die Anschlussstellen angrenzenden Leiterstücke nach dem Abschmelzen voneinander in Richtung der Anschlussstellen zurückziehen. Um trotz der Abdeckung der Stirnseite der Batteriezelle eine elektrische Verbindung zwischen der Kontaktfeder und dem elektrischen Pol herstellen zu können, kann zwischen der Kontaktfeder und dem elektrischen Pol ein Verbindungsleiter vorgesehen sein. In einer besonders bevorzugten Ausführungsform bildet der Verbindungsleiter den aufgenommenen Endabschnitt der Batteriezelle mantelseitig umgreifende Federzungen aus, sodass das Schutzelement unmittelbar an der Stirnseite der Batteriezelle anliegen kann. Dies ist selbstverständlich nur dann sinnvoll möglich, wenn der Batteriezellenmantel in diesem Bereich eine elektrische Kontaktierung ermöglicht. Zu diesem Zweck können die Aufnahmen umfangsseitige Durchbrüche aufweisen, durch die hindurch die Kontaktzungen mit dem in der Aufnahme aufgenommenen Batteriezellenmantel kontaktiert werden können.

Um die freie Anschlussstelle der Kontaktfeder zuverlässig und rasch mit anderen elektrischen Komponenten verbinden zu können, ohne eine Beschädigung der Batteriezelle in Kauf nehmen zu müssen, wird vorgeschlagen, dass die vom Abstandhalter abgestützte Anschlussstelle der Kontaktfeder über einen Schweißpunkt mit einem Kontaktblech verbunden ist. Bei geeigneter Dimensionierung wird die freie Anschlussstelle durch den Abstandhalter so abgestützt, dass sie an das Kontaktblech angedrückt wird, sodass unabhängig vom Schweißverfahren eine zuverlässige stoffschlüssige Verbindung auch bei industrieller Fertigung erreicht werden kann. Darüber hinaus erlaubt die durch den Abstandhalter vorgegebene Distanz zur Stirnseite der Batteriezelle einen höheren Energieeintrag beim Schweißvorgang, während die dabei entstehende Wärmestrahlung über das Schutzelement großflächig von der Stirnseite der Batteriezelle abgehalten wird.

Damit für eine einfache Fertigung die Kontaktfedern unabhängig von den Batteriezellen positioniert und auf Zug gespannt werden können, kann jede Aufnahme der ersten Gruppe auf der der Batteriezelle gegenüberliegenden Seite des Schutzelements Rasthaken zum Rückhalten der Kontaktfederbasis gegenüber der vom Abstandhalter abgestützten Anschlussstelle aufweisen. Zufolge dieser Maßnahme ist keine elektrische oder mechanische Verbindung zwischen der Kontaktfeder und der Batteriezelle erforderlich, sodass die Arbeitsschritte des Einsetzens der Batteriezelle und des Einsetzens der Kontaktfeder voneinander getrennt werden können, ohne dass dadurch die relative Lage der Kontaktfeder zur Batteriezelle beeinträchtigt wird. Obwohl grundsätzlich auch eine Anordnung der Rasthaken am Schutzelement ein Rückhalten der Kontaktfederbasis gegenüber der vom Abstandhalter abgestützten Anschlussstelle ermöglichen würde, ergibt sich durch die Anordnung der Rasthaken an der Aufnahme der Vorteil, dass zusätzlich zur Kontaktfederbasis auch das Schutzelement in seiner Position festgelegt werden kann. Besonders günstige Fertigungsbedingungen ergeben sich, wenn der die Aufnahmen bildende Rahmen, die Rasthaken und die Schutzelemente einstückig, beispielsweise als Spritzgussteil, ausgebildet sind. Ein besonders sicheres Positionieren der Kontaktfeder ergibt sich, wenn mehrere, beispielsweise drei, Rasthaken umfangseitig die Kontaktfederbasis hintergreifen.

Um Fertigungstoleranzen der Batteriezellen genauso wie des Rahmens und der Aufnahmen in allen drei Raumrichtungen ausgleichen zu können, kann erfindungsgemäß vorgesehen sein, dass jede Aufnahme einer zweiten Gruppe sowohl mantelseitig in die Aufnahmeöffnung vorragende als auch am Aufnahmegrund federnd gegen die Aufnahme abgestützte Zentriervorsprünge aufweist. Während die federnd gegen die Aufnahme abgestützten Zentriervorsprünge die Batteriezellen entlang der Fügerichtung zentrieren, ermöglichen die mantelseitig in die Aufnahmeöffnung vorragenden Zentriervorsprünge eine Zentrierung der Batteriezelle quer zur Fügerichtung. Federnd gegen die Aufnahme abgestützte Zentriervorsprünge für einen Toleranzausgleich in Fügerichtung können in einfacher Weise hergestellt werden, wenn am Aufnahmegrund der Aufnahmen der zweiten Gruppe ein mit Zentriervorsprüngen versehener Steg vorgesehen ist, der zwischen den Zentriervorsprüngen und der Aufnahme bzw. dem Rahmen Materialaussparungen zur Erhöhung der Biegeelastizität des Steges in diesem Bereich aufweist. Die quer zur Fügerichtung wirkenden, radial in die Aufnahmeöffnung vorragenden Zentriervorsprünge können sich für eine gute Krafteinleitung und einen einfachen Fügeprozess über die gesamte Höhe der Aufnahme erstrecken.

Damit die erfindungsgemäße Vorrichtung zu einer kompakten Baueinheit zusammengefügt werden kann, ohne dabei Einbußen hinsichtlich der Sicherheit und Funktionalität hinnehmen zu müssen, wird vorgeschlagen, dass ein zweiter, dem ersten Rahmen gegenüberliegender Rahmen vorgesehen ist, wobei sich jeweils zwei Aufnahmen unterschiedlicher Gruppen gegenüberliegen. Da ein Endabschnitt der Batteriezelle in einer Aufnahme der ersten Gruppe und der andere Endabschnitt der Batteriezelle in einer Aufnahme der ersten Gruppe angeordnet ist, können die Vorteile beider Gruppen der Aufnahmen für die eingesetzte Batteriezelle genutzt werden. Die Batteriezellen sind demnach sowohl durch eine Schmelzsicherung geschützt und erfahren überdies einen Toleranzausgleich in und quer zu ihrer Fügerichtung.

In einem Rahmen können naturgemäß auch Aufnahmen unterschiedlicher Gruppen vorgesehen sein, wodurch auch eine serielle Verschaltung von bezüglich ihrer Längsachse parallel ausgerichteten Batteriezellen möglich ist. Um den Fertigungsaufwand für solche seriellen Verschaltungen möglichst klein zu halten, kann der Aufnahmegrund der Aufnahmen der zweiten Gruppe einen Durchbruch aufweisen, durch den eine aus dem Kontaktblech ausgestanzte Kontaktleiter geführt sein kann. Der Kontaktleiter ist demnach einstückig aus dem Kontaktblech ausgeformt und muss nicht erst stoffschlüssig mit dem Kontaktblech verbunden werden, wodurch ein Fertigungsschritt eingespart werden kann. Soll nun eine serielle Kontaktierung zweier Batteriezellen erfolgen, so wird ein Endabschnitt einer ersten Batteriezelle in der Kontaktfeder einer Aufnahme der ersten Gruppe und ein dem Endabschnitt der ersten Batteriezelle gegensinnig gepolter Endabschnitt einer zweiten Batteriezelle in einer Aufnahme der zweiten Gruppe angeordnet. Anschließend wird auf der den Batteriezellen gegenüberliegenden Seite des Rahmens ein Kontaktblech eingesetzt, das mit der Kontaktfeder stoffschlüssig verbunden wird und deren Kontaktleiter in die Aufnahme der zweiten Gruppe ragt, die dort eingesetzte Batteriezelle kontaktiert und gegebenenfalls stoffschlüssig mit dieser Batteriezelle verbunden werden kann. Der Kontaktleiter kann auch eine triskelförmige Kontaktfeder sein. Dies bedeutet, dass eine eine Öffnung aufweisende Anschlussstelle der Kontaktfeder durch drei radialsymmetrisch angeordneten Kreisbögen mit dem Kontaktblech verbunden ist.

Um bei gleichbleibender Höhe der Vorrichtung in Fügerichtung nicht nur eine parallele, sondern gleichzeitig auch eine serielle Verschaltung der Batteriezellen zu ermöglichen, und damit ein höheres Spannungspotential zur Verfügung stellen zu können, wird vorgeschlagen, dass in den Aufnahmen der ersten Gruppe eingesetzte Batteriezellen über das Kontaktblech untereinander parallel und mit den in die Aufnahmen der zweiten Gruppen eingesetzten Batteriezellen seriell elektrisch verbunden sind. Dadurch kann bereits bei der Ausgestaltung der Rahmen bzw. bei der Auswahl der in den Rahmen eingearbeiteten Aufnahmen die Speicherkapazität und die Spannung des Batteriemoduls definiert werden.

Um an beiden Endabschnitten der Batteriezellen ähnliche mechanische und elektrische Bedingungen durch die Kontaktfedern zu schaffen, können die Schutzelemente die Höhe der über die Stirnflächen vorragenden Pole der Batteriezellen aufweisen. Dies bringt den Vorteil, dass die Grundkörper der Batteriezellen, unabhängig welcher Pol dem Kontaktblech zugewandt ist, die selbe Beabstandung zum Kontaktblech aufweisen. Durch diesen Höhenniveauangleich der Grundkörper können beide Pole durch Kontakte kontaktiert werden, die hinsichtlich ihrer elektrischen und mechanischen Eigenschaften, beispielsweise deren Vorspannung, gleich ausgebildet sind, wodurch sich für beide Pole eine gleichmäßige elektrische und mechanische Kontaktierung ergibt. Das Schutzelement kann gemeinsam mit dem Abstandhalter die Form des nicht von der Kontaktfeder kontaktierten Pols aufweisen.

Zur Prüfung des Betriebszustandes der Batteriezellen kann es erwünscht sein, regelmäßig die Temperatur und den Spannungsabfall zu kontrollieren. Damit die dazu benötigten Vorrichtungen im Rahmen des restlichen Assemblierungsvorganges angeschlossen werden können, empfiehlt es sich, dass Anschlüsse zum Spannungsabgriff über eine Nut- und Federverbindung mit dem Kontaktleiter verbunden sind. Durch diese Nut- und Federverbindung können die Anschlüsse vorpositioniert werden und im Rahmen des Stoffschlusses zwischen dem Kontaktleiter und dem zweiten Zellenpol ebenfalls stoffschlüssig mit dem Kontaktleiter verbunden werden.

In der Zeichnung ist der Erfindungsgegenstand beispielsweise dargestellt. Es zeigen
- Fig. 1: eine Explosionsdarstellung einer erfindungsgemäßen Vorrichtung,
- Fig. 2: eine Draufsicht auf eine erfindungsgemäße Vorrichtung,
- Fig. 3: einen Schnitt entlang der Linie III-III der Fig. 2 in vergrößertem Maßstab und
- Fig. 4: eine Detailansicht der Aufnahmen einer zweiten Gruppe der erfindungsgemäßen Vorrichtung in noch größerem Maßstab.

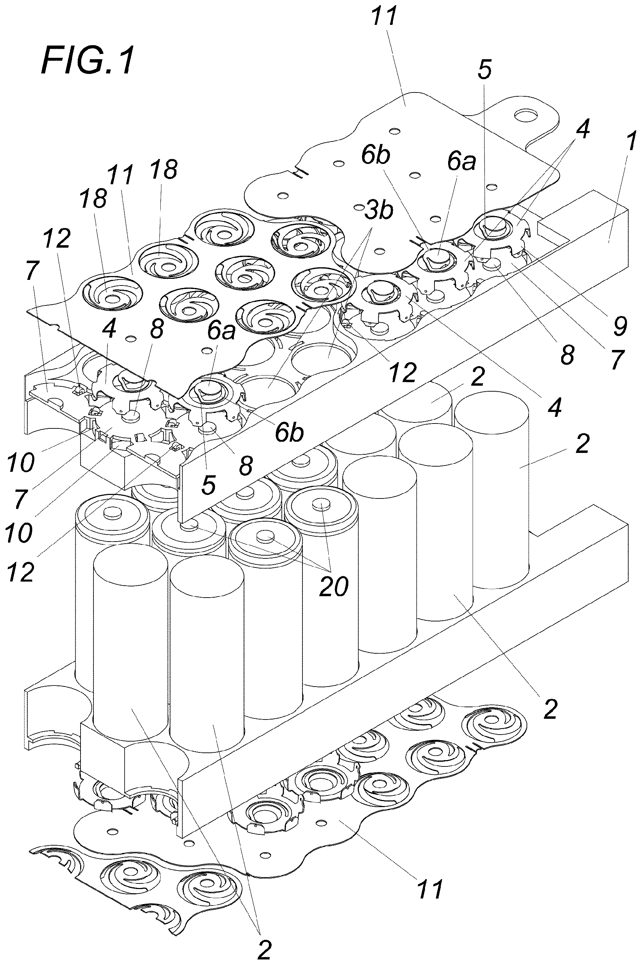

Eine erfindungsgemäße Vorrichtung weist, wie insbesondere der Fig. 1 zu entnehmen ist, einen Rahmen 1 mit Aufnahmen für Endabschnitte von bezüglich ihrer Längsachse parallel ausgerichteten Batteriezellen 2 auf. In jeder Aufnahme einer ersten Gruppe 3a ist eine Kontaktfeder 4 zum Kontaktieren der Batteriezelle 2 angeordnet. Die Kontaktfeder 4 weist eine Schmelzsicherung 5 auf, welche im Schadensfall einer mit der Kontaktfeder 4 verbundenen Batteriezelle 2 durchschmilzt und die fehlerhafte Batteriezelle 2 elektrisch von anderen Batteriezellen 2 abtrennt. Damit ein unerwünschtes Wiederkontaktieren der durch das Durchschmelzen der Schmelzsicherung 5 entstandenen beiden Anschlussstellen 6a, 6b verhindert werden kann, ist zwischen der Batteriezelle 2 und der Kontaktfeder 4 ein Schutzelement 7 mit einem Abstandhalter 8 angeordnet. Das Schutzelement 7 liegt dabei zwischen der Stirnseite der Batteriezellen 2 und der Kontaktfeder 4 und kann somit einen stirnseitigen Austritt eines Batteriezellenwickels verhindern. Der Abstandhalter 8 sorgt dafür, dass die beiden Anschlussstellen 6a, 6b der Schmelzsicherung 5 nach dem Durchschmelzen voneinander räumlich getrennt bleiben, wodurch eine neuerliche elektrische Verbindung verhindert wird. Um trotz des abschirmenden Schutzelementes 7 eine sichere Kontaktierung zu ermöglichen, weist die Kontaktfeder 4 Kontaktzungen 9 auf, welche den aufgenommenen Endabschnitt der Batteriezellen 2 mantelseitig umgreifen. Diese Kontaktzungen 9 können durch Durchbrüche 10 der Aufnahme der ersten Gruppe 3a geführt werden.

Mehrere Kontaktfedern 4 können, wie dies beispielsweise aus der Fig. 1 ersichtlich ist, über ein Kontaktblech 11 miteinander verbunden sein. Die Kontaktfedern 4 können hierzu an deren Anschlussstellen 6a über einen Schweißpunkt mit dem Kontaktblech 11 verbunden sein. Vorteilhafterweise ist der Abstandhalter 8, der ja die Schmelzsicherung aufspannt, so dimensioniert, dass dieser die Anschlussstelle 6a gegen das Kontaktblech 11 andrückt und so die Anschlussstelle 6a vorpositioniert, wodurch ein rascher industrieller Schweißvorgang ermöglicht wird.

Damit die Kontaktfeder 4 auch ohne bereits eingesetzte Batteriezelle 2 in die Aufnahme einer ersten Gruppe 3a eingesetzt und vorpositioniert werden kann, kann deren Kontaktfederbasis von drei Rasthaken 12 gegenüber der vom Abstandhalter 8 abgestützten Anschlussstelle 6a zurückgehalten werden.

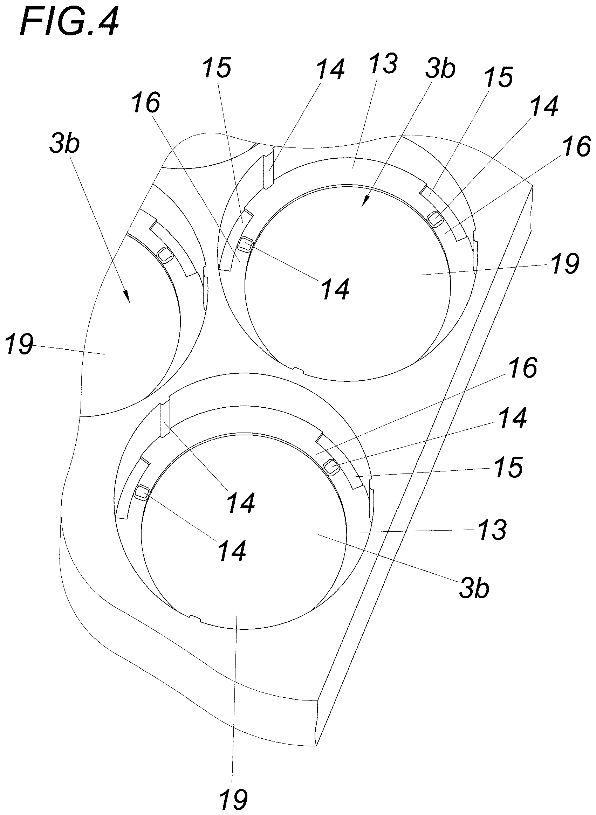

Die Fig. 4 stellt eine Detailansicht von Aufnahmen einer zweiten Gruppe 3b dar. Die Aufnahmen einer zweiten Gruppe 3b weisen einerseits mantelseitig radial in die Aufnahmeöffnung vorragende und andererseits am Aufnahmegrund 13 angeordnete Zentriervorsprünge 14 auf. Dadurch können fertigungsbedingte Unterschiede von Batteriezellen 2 bzw. des Rahmens 1 selbst ausgeglichen werden. Die mantelseitigen Zentriervorsprünge 14 sorgen dabei für eine Zentrierung der Batteriezellen 2 quer zu deren Fügerichtung. Die auf dem Aufnahmegrund 13 der Aufnahme einer zweiten Gruppe 3b angeordneten Zentriervorrichtungen 14 sorgen für einen Toleranzausgleich entlang der Fügerichtung. Hierzu sind diese federnd ausgestaltet. Eine solche federnde Ausgestaltung kann auf einfache Weise erzielt werden, wenn die Zentriervorrichtungen 14 auf durch Materialaussparungen 15 geschwächten Stegen 16 des Aufnahmegrunds 13 angeordnet sind.

Die Aufnahmen einer zweiten Gruppe 3b können gemeinsam mit den Aufnahmen einer ersten Gruppe 3a, dem Rahmen 1, den Schutzelementen 7 und den Rasthaken 12 von einem einstückigem Spritzgussteil ausgebildet sein.

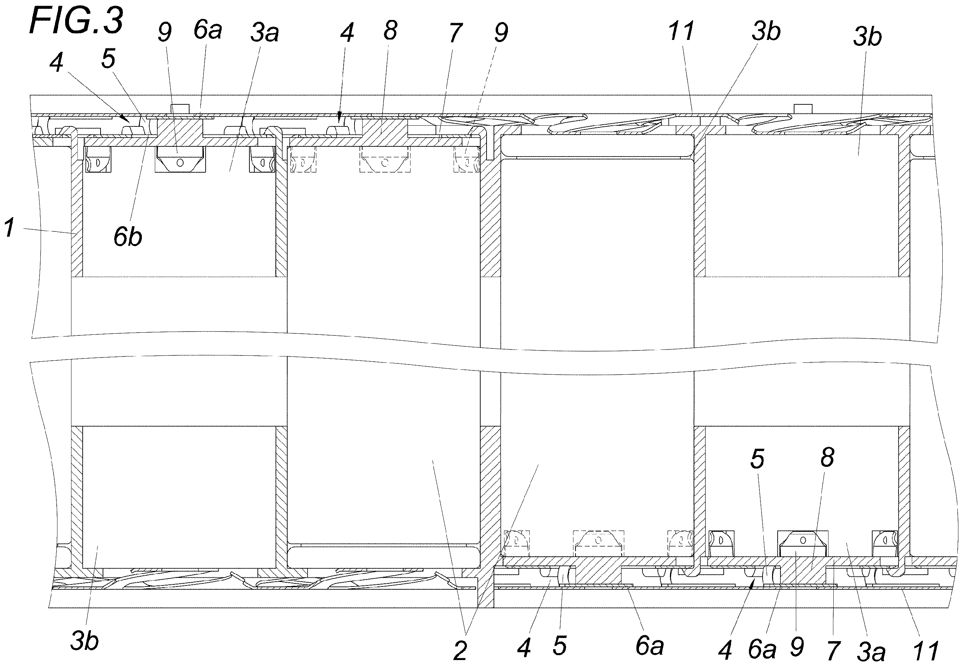

Wie aus Fig. 1 bzw. Fig. 3 ersichtlich ist, kann die erfindungsgemäße Vorrichtung zwei sich gegenüberliegende Rahmen 1 aufweisen, wobei die Rahmen 1 so ausgebildet sind, dass sich Aufnahmen unterschiedlicher Gruppen 3a, 3b gegenüberliegen, sodass die Batteriezellen 2 sowohl von einer Schmelzsicherung 5 geschützt, als auch von den Zentriervorsprüngen 14 zentriert sind.

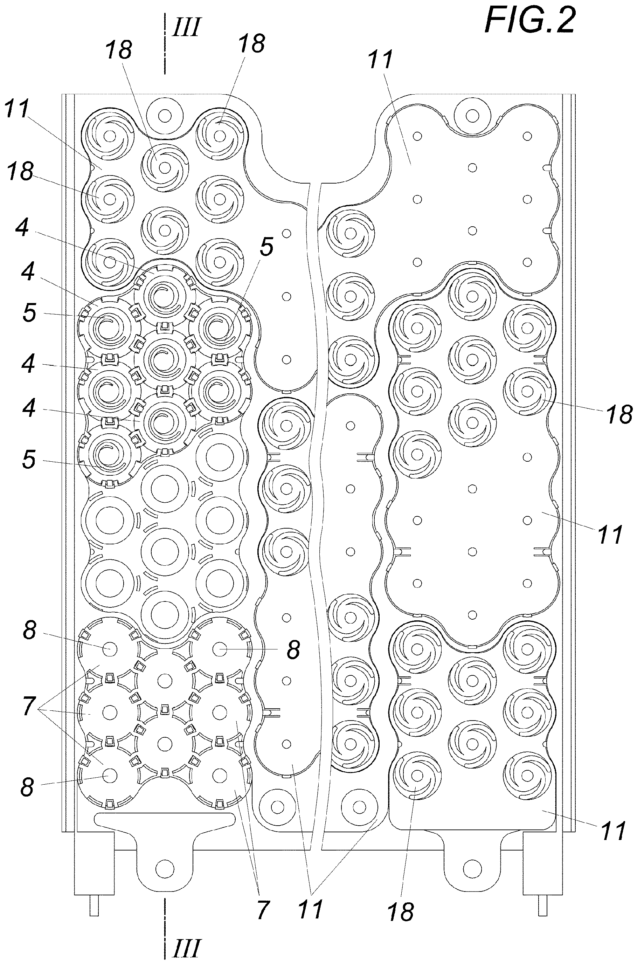

In Fig. 2 sind unterschiedliche Kontaktbleche 11 dargestellt. Je nachdem, ob das Kontaktblech 11 zum seriellen oder parallelen Verschalten mehrerer Batteriezellen 2 eingesetzt werden soll, kann es unterschiedlich ausgestaltet sein. So weist das Kontaktblech 11 entweder Löcher 17 zum erleichterten Verschweißen mit den Kontaktfedern 4 und/oder aus dem Kontaktblech 11 ausgestanzte Kontaktleiter 18 auf. Die Kontaktleiter 18 können dabei durch einen Durchbruch 19 der Aufnahmen der zweiten Gruppe 3b geführt sein, welche einen Endabschnitt der Batteriezelle 2 stirnseitig kontaktiert. Die Kontaktleiter 18 können ebenfalls als Kontaktfeder ausgebildet sein, welche eine triskelförmige Schmelzsicherung aufweisen.

Die in den Aufnahmen einer zweiten Gruppe 3b angeordneten Kontaktleiter 18 des Kontaktblechs 11 können für einen bestimmten Pol, beispielsweise dem Pluspol vorgesehen sein. Die mit dem Kontaktblech 11 stoffschlüssig verbundenen, in den Aufnahmen einer ersten Gruppe 3a angeordneten Kontaktfedern 4 können beispielsweise für einen gegensinnigen Pol, beispielsweise dem Minuspol, vorgesehen sein. Dies bedeutet, dass in den Aufnahmen der ersten Gruppe 3a eingesetzte Batteriezellen 2 über das Kontaktblech 11 untereinander parallel und mit den in die Aufnahmen der zweiten Gruppen 3b eingesetzten Batteriezellen 2 seriell elektrisch verbunden sind.

Um einen Höhenniveauangleich der Grundkörper der bezüglich ihrer Polung gegensinnig angeordneten Batteriezellen 2 zu erreichen, können die Schutzelemente 7 die Höhe der über die Stirnfläche der Batteriezellen 2 vorragende Pole 20 aufweisen.

## Patentansprüche

1. Vorrichtung mit einem Rahmen (1), der Aufnahmen für die stirnseitigen Endabschnitte von bezüglich ihrer Längsachse parallel ausgerichteten Batteriezellen (2) aufweist, **dadurch gekennzeichnet, dass** jede Aufnahme einer ersten Gruppe (3a) ein die Stirnseite der aufgenommenen Batteriezelle (2) gegenüber einer Kontaktfeder (4) abdeckendes Schutzelement (7) aufweist, das auf seiner der Batteriezelle (2) gegenüberliegenden Seite einen Abstandhalter (8) zur räumlichen Trennung der beiden Anschlussstellen (6a, 6b) einer durch die Kontaktfeder (4) gebildeten Schmelzsicherung (5) umfasst.

2. Vorrichtung nach Anspruch 1, **dadurch gekennzeichnet, dass** die vom Abstandhalter (8) abgestützte Anschlussstelle (6a) der Kontaktfeder (4) über einen Schweißpunkt mit einem Kontaktblech (11) verbunden ist.

3. Vorrichtung nach Anspruch 1 oder 2, **dadurch gekennzeichnet, dass** jede Aufnahme der ersten Gruppe (3a) auf der der Batteriezelle (2) gegenüberliegenden Seite des Schutzelements (7) Rasthaken (12) zum Rückhalten der Kontaktfederbasis gegenüber der vom Abstandhalter (8) abgestützten Anschlussstelle (6a) aufweist.

4. Vorrichtung nach einem der Ansprüche 1 bis 3, **dadurch gekennzeichnet, dass** jede Aufnahme einer zweiten Gruppe (3b) sowohl mantelseitig in die Aufnahmeöffnung vorragende als auch am Aufnahmegrund (13) federnd gegen die Aufnahme abgestützte Zentriervorsprünge (14) aufweist.

5. Vorrichtung nach Anspruch 4, **dadurch gekennzeichnet, dass** ein zweiter, dem ersten Rahmen (1) gegenüberliegender Rahmen (1) vorgesehen ist, wobei sich jeweils zwei Aufnahmen unterschiedlicher Gruppen (3a,3b) gegenüberliegen.

6. Vorrichtung nach Anspruch 4 oder 5, **dadurch gekennzeichnet, dass** der Aufnahmegrund der Aufnahmen der zweiten Gruppe (3b) einen Durchbruch (19) aufweist, durch den ein aus dem Kontaktblech (11) ausgestanzter Kontaktleiter (18) geführt ist.

7. Vorrichtung nach einem der Ansprüche 4 bis 6, **dadurch gekennzeichnet, dass** in den Aufnahmen der ersten Gruppe (3a) eingesetzte Batteriezellen (2) über das Kontaktblech (11) untereinander parallel und mit den in die Aufnahmen der zweiten Gruppen (3b) eingesetzten Batteriezellen (2) seriell elektrisch verbunden sind.

8. Vorrichtung nach einem der Ansprüche 1 bis 7, **dadurch gekennzeichnet, dass** die Schutzelemente (7) die Höhe der über die Stirnflächen vorragenden Pole (20) der Batteriezellen (2) aufweisen.

## Claims

1. Device having a frame (1) which has receptacles for the end-face end sections of battery cells (2) aligned parallel with respect to their longitudinal axis, **characterised in that** each receptacle of a first group (3a) has a protective element (7) which covers the end face of the battery cell (2) received with respect to a contact spring (4) and which comprises, on its side opposite the battery cell (2), a spacer (8) for spatially separating the two connection joints (6a, 6b) of a fuse (5) formed by the contact spring (4).

2. Device according to claim 1, **characterised in that** the connection joint (6a) of the contact spring (4), the connection joint (6a) being supported by the spacer (8), is connected to a contact sheet (11) via a welding point.

3. Device according to claim 1 or 2, **characterised in that** each receptacle of the first group (3a) on the side of the protective element (7) opposite the battery cell (2) has latching hooks (12) for retaining the contact spring base relative to the connection joint (6a) supported by the spacer (8).

4. Device according to one of claims 1 to 3, **characterised in that** each receptacle of a second group (3b) has centring projections (14) which project into the receptacle opening on the jacket side and are resiliently supported against the receptacle on the receptacle base (13).

5. Device according to claim 4, **characterised in that** a second frame (1) opposite the first frame (1) is provided, wherein in each case two receptacles of different groups (3a, 3b) are opposite one another.

6. Device according to claim 4 or 5, **characterised in that** the receptacle base of the second group (3b) has an aperture (19) through which a contact conductor (18) punched out of the contact plate (11) is guided.

7. Device according to one of claims 4 to 6, **characterised in that** battery cells (2) inserted in the receptacles of the first group (3a) are electrically connected in parallel with one another via the contact plate (11) and in series with the battery cells (2) inserted in the receptacles of the second groups (3b).

8. Device according to one of claims 1 to 7, **characterised in that** the protective elements (7) have the height of the poles (20) of the battery cells (2) projecting beyond the end faces.

## Revendications

1. Dispositif doté d'un châssis (1) qui comporte des logements destinées aux extrémités frontales de cellules de batterie (2) orientées parallèlement selon leur axe longitudinal, **caractérisé en ce que** chaque logement d'un premier groupe (3a) comporte un élément de protection (7) recouvrant la face frontale de la cellule de batterie (2) logée par rapport à un ressort de contact (4) et possédant sur sa face opposée à la cellule de batterie (2) un écarteur (8) pour séparer spatialement les deux points de raccordement (6a, 6b) d'un fusible (5) constitué par le ressort de contact (4).

2. Dispositif selon la revendication 1, **caractérisé en ce que** le point de raccordement (6a) du ressort de contact (4) soutenu par l'écarteur (8) est relié à une plaque de contact (11) par un point de soudure.

3. Dispositif selon la revendication 1 ou 2, **caractérisé en ce que** chaque logement du premier groupe (3a) présente sur la face de l'élément de protection (7) opposée à la cellule de batterie (2) des crochets de blocage (12) pour retenir la base du ressort de contact par rapport au point de raccordement (6a) soutenu par l'écarteur (8).

4. Dispositif selon une des revendications 1 à 3, **caractérisé en ce que** chaque logement d'un deuxième groupe (3b) présente des saillies de centrage (14) saillant d'une part sur le côté de l'enveloppe dans le logement et s'appuyant d'autre part élastiquement contre le logement au niveau du fond de logement (13).

5. Dispositif selon la revendication 4, **caractérisé en ce qu'**il est prévu un deuxième châssis (1) opposé au premier châssis (1), deux logements appartenant à des groupes différents (3a, 3b) se faisant face à chaque fois.

6. Dispositif selon la revendication 4 ou 5, **caractérisé en ce que** le fond de logement des logements du deuxième groupe (3b) présente une ouverture (19) à travers laquelle le conducteur de contact (18) découpé dans la plaque de contact (11) est guidé.

7. Dispositif selon une des revendications 4 à 7, **caractérisé en ce que** les cellules de batterie (2) insérées dans les logements du premier groupe (3a) sont reliées électriquement en parallèle entre elles et en série avec les cellules de batterie (2) insérées dans les logements du deuxième groupe (3b) par la plaque de contact (11).

8. Dispositif selon les revendications 1 à 7, **caractérisé en ce que** les éléments de protection (7) présentent la hauteur des pôles (20) des cellules de batterie (2) saillant au-dessus des faces frontales.
